# EUROPEAN PATENT APPLICATION

(11) **EP 3 249 600 A1**
(43) Date of publication of application: **29.11.2017**
(21) Application number: 16740165.2
(22) Date of filing: 19.01.2016
(51) Int. Cl.: G06Q 50/00

(54) **ENVIRONMENTAL ACTIVITY SUPPORT SYSTEM, ENVIRONMENTAL ACTIVITY SUPPORT METHOD, AND COMPUTER PROGRAM**

(30) Priority: 21.01.2015 JP 2015009810
(71) Applicant: Kabushiki Kaisha Toshiba, Inc., Tokyo 105-8001 (JP); Toshiba Digital Solutions Corporation, Kawasaki-shi, Kanagawa 212-8585 (JP)
(72) Inventor: YAMAGUCHI Shuichi, Tokyo 105-8001 (JP); YAMAKAWA Mizuki, Tokyo 105-8001 (JP); OHMUKAI Shinya, Tokyo 105-8001 (JP); YOSHIDA Mayuko, Tokyo 105-8001 (JP); MINEMURA Takashi, Tokyo 105-8001 (JP); TAMADA Kouji, Kawasaki-shi Kanagawa 2128585 (JP)
(74) Representative: Moreland, David
(86) International application number: PCT/JP2016/051439
(87) International publication number: WO 2016/117558

(57) **Abstract**

An environmental activity supporting system according to an embodiment includes a point giving controller, a point processor, and a notification unit. The point giving controller is configured to determine whether or not a predetermined environmental activity satisfying a condition registered in advance is performed based on determination target information used for determining whether or not the predetermined environmental activity is performed and give points used for employing new performance of a public benefit environmental activity to a user relating to the determination target information when the predetermined environmental activity is determined to be performed. The point processor is configured to assign points of the user to the public benefit environmental activity desired by the user when a request indicating use of the points is made from the user. The notification unit is configured to give a notification of information of the public benefit environmental activity satisfying a set value set in advance in accordance with points assigned to the public benefit environmental activity.

## Description

### [Technical Field]

Embodiments of the present invention relate to an environmental activity supporting system, an environmental activity supporting method, and a computer program.

### [Background Art]

Conventionally, in accordance with the improvement of people's awareness of environmental issues and the spread of energy saving knowledge, efforts have been taken to encourage the use of public transport facilities, the use of bicycles, and energy saving in houses. For such environmental activities of people, privileges called eco points have been offered. However, since a cost is taken for such a privilege, the privilege is limited to a small gift or the like. For this reason, people's motivation for environmental activities (hereinafter referred to as "public benefit environmental activities) for people's public benefit (hereinafter referred to as public benefit) has not improved, and there is a risk of the public benefit environmental activities declining.

### [Citation List]

### [Patent Literature]

### [Patent Literature 1]

Japanese Unexamined Patent Application, First Publication No. 2013-65270

### [Summary of Invention]

### [Technical Problem]

An object to be achieved by the present invention is to provide an environmental activity supporting system, an environmental activity supporting method, and a computer program capable of supporting public benefit environmental activities by improving people's motivation for public benefit environmental activities.

### [Solution to Problem]

An environmental activity supporting system according to an embodiment includes a point giving controller, a point processor, and a notification unit. The point giving controller is configured to determine whether or not a predetermined environmental activity satisfying a condition registered in advance is performed based on determination target information used for determining whether or not the predetermined environmental activity is performed and give points used for employing new performance of a public benefit environmental activity to a user relating to the determination target information when the predetermined environmental activity is determined to be performed. The point processor is configured to assign points of the user to the public benefit environmental activity desired by the user when a request indicating use of the points is made by the user. The notification unit is configured to notify of information of the public benefit environmental activity satisfying a set value set in advance in accordance with points assigned to the public benefit environmental activity.

### [Brief Description of Drawings]

Fig. 1 is a system configuration diagram illustrating the system configuration of a support system.
Fig. 2 is a schematic block diagram illustrating the functional configuration of an environmental activity supporting system 100.
Fig. 3 is a diagram illustrating a specific example of a public benefit environmental activity information table.
Fig. 4 is a flowchart illustrating the flow of a point giving process of the environmental activity supporting system 100.
Fig. 5 is a flowchart illustrating the flow of a point assigning process of the environmental activity supporting system 100.
Fig. 6 is a schematic block diagram illustrating the functional configuration of a first embodiment (environmental activity supporting system 100a) of the environmental activity supporting system 100.
Fig. 7 is a schematic block diagram illustrating the functional configuration of a second embodiment (environmental activity supporting system 100b) of the environmental activity supporting system 100.
Fig. 8 is a schematic block diagram illustrating the functional configuration of a third embodiment (environmental activity supporting system 100c) of the environmental activity supporting system 100.
Fig. 9 is a schematic block diagram illustrating the functional configuration of a fourth embodiment (environmental activity supporting system 100d) of the environmental activity supporting system 100.

### [Description of Embodiments]

Hereinafter, an environmental activity supporting system, an environmental activity supporting method, and a computer program according to embodiments will be described with reference to the drawings.

### [Overview]

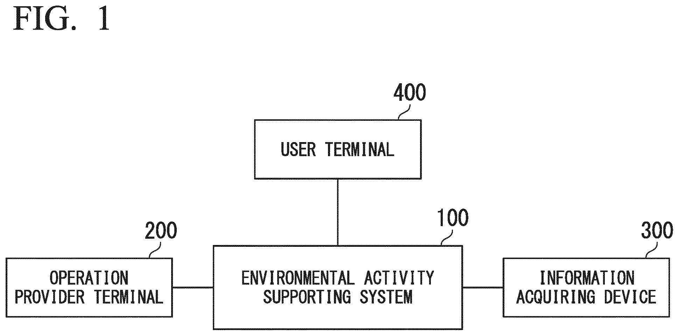

Fig. 1 is a system configuration diagram illustrating the system configuration of a support system.

A support system according to this embodiment includes: an environmental activity supporting system 100; an operation provider terminal 200; an information acquiring device 300; and a user terminal 400.

The environmental activity supporting system 100 is a system used for supporting public benefit environmental activities by improving people's motivation for the public benefit environmental activities. Here, people are targets for receiving support from the environmental activity supporting system 100 and, for example, are natural people, legal entities, citizens, and the like. In description presented below, people who are targets for receiving support from the environmental activity supporting system 100 will be described as users. The environmental activity supporting system 100 stores information relating to public benefit environmental activities that are new performance targets registered by an operation provider operating the operation provider terminal 200. Specific examples of the public benefit environmental activities include an environmental project such as reforestation, a bicycle lane maintenance project, and the like.

The environmental activity supporting system 100 gives points according to a predetermined environmental activity to a user based on information acquired by the information acquiring device 300. The predetermined environmental activity is an environmental activity registered in the environmental activity supporting system 100 as one of the environmental activities. Specific examples of the predetermined environmental activity include the use of public transport facilities, moving on foot, a reduction in an energy use amount, an environmental activity in a broad sense, an environmental activity in cooperation with another system, and the like. In addition, the predetermined environmental activity may be registered or removed by an operation provider of the environmental activity supporting system 100 or set in advance. The points are points used for employing a public benefit environmental activity desired to be newly performed by the user. When a request for the use of points is made by a user using the user terminal 400, the environmental activity supporting system 100 assigns points to a public benefit environmental activity desired by the user using the user terminal 400.

The operation provider terminal 200 is a communication device operated by an operation provider of the environmental activity supporting system 100. The operation provider terminal 200, for example, is configured using an information processing device such as a personal computer. The operation provider terminal 200 registers a public benefit environmental activity in the environmental activity supporting system 100 in accordance with an operation of the operation provider. Registered public benefit environmental activities, for example, are activities contributing to society and the environment provided according to donations of administrations, nonprofit organization (NPO) corporations, companies, and the like for the public. In the description presented below, organizations such as administrations, NPO corporations, and companies will be collectively referred to as providing organizations. A providing organization provides (donates) a public benefit environmental activity matching its situation. For example, a providing organization provides a public benefit environmental activity that is a public benefit environmental activity in the form of a limited use. Here, a public benefit environmental activity in the form of a limited use, for example, is an activity of performing reforestation for a predetermined area in which the providing organization is located.

The information acquiring device 300 acquires predetermined information. The predetermined information acquired by the information acquiring device 300 is information that is used for determining whether or not a predetermined environmental activity is performed. In description presented below, the predetermined information acquired by the information acquiring device 300 will be represented as determination target information. The information acquiring device 300, for example, is a communication terminal such as a smartphone, an energy management system (EMS) such as a home energy management system (HEMS) or a building energy management system (BEMS), or the like. When the information acquiring device 300 is a communication terminal, the information acquiring device 300 acquires the positional information of a user holding the device itself and acceleration information of the user holding the device itself through measurement. The positional information represents information relating to the current position of the user holding the information acquiring device 300. The acceleration information represents information relating to the movement of the user holding the information acquiring device 300. In addition, when the information acquiring device 300 is a communication terminal, the information acquiring device 300 may acquire user information in accordance with the user's operation. The user information represents information relating to a user such as the age, the sex, and the like of a user holding the information acquiring device 300. When the information acquiring device 300 is an EMS, the information acquiring device 300 acquires energy use information of a house, the inside of a building, and the like through measurement. The energy use information represents information relating to the usage amount of energy inside a building. The information acquiring device 300 acquires determination target information regularly (for example, every second or every ten seconds). Thereafter, the information acquiring device 300 transmits the determination target information to the environmental activity supporting system 100.

The user terminal 400 is a communication terminal held by a user. The user terminal 400 is, for example, a smartphone, a tablet terminal, a portable phone, a notebook personal computer, a wearable terminal such as a wrist watch, a gaming device, or the like. When the information acquiring device 300 is a communication terminal, the user terminal 400 is a communication terminal used by the same user as the user using the information acquiring device 300. The user terminal 400 transmits a point use notification to the environmental activity supporting system 100 in accordance with the user's operation. The point use notification is a notification used for requesting the use of points owned by a user. In the point use notification, the number of points used by a user and information of a public benefit environmental activity to which the points are assigned are included.

Hereinafter, the flow of the process of the support system will be described.

The information acquiring device 300 regularly acquires predetermined information and transmits determination target information to the environmental activity supporting system 100. The environmental activity supporting system 100 receives the determination target information from the information acquiring device 300 and determines whether or not a predetermined environmental activity has been performed based on the received determination target information. When the predetermined environmental activity has been performed, the environmental activity supporting system 100 gives points to a user relating to the determination target information. Thereafter, when a request for the use of points is made by a user, the environmental activity supporting system 100 assigns the points to a public benefit environmental activity desired by the user. More specifically, first, a user selects the number of points to be used and a public benefit environmental activity to which the points are assigned by operating the user terminal 400. Next, the user terminal 400 transmits a point use notification including information of the number of points and the public benefit environmental activity to which the points are to be assigned selected by the user to the environmental activity supporting system 100. Then, the environmental activity supporting system 100 assigns points to a public benefit environmental activity desired by a user based on the information of the number of points and the public benefit environmental activity included in the point use notification. When the public benefit environmental activity to which the points are assigned satisfies a predetermined condition, the environmental activity supporting system 100 transmits a performance request notification to the operation provider terminal 200. The performance request notification is a notification including information of a public benefit environmental activity satisfying a predetermined condition. When a performance request notification is provided, the operation provider operating the operation provider terminal 200 notifies a providing organization, which is a providing source of the public benefit environmental activity satisfying the predetermined condition, that the number of points is filled. Then, the providing organization performs a public benefit environmental activity in accordance with the notification.

The flow of the process of the support system has been described above.

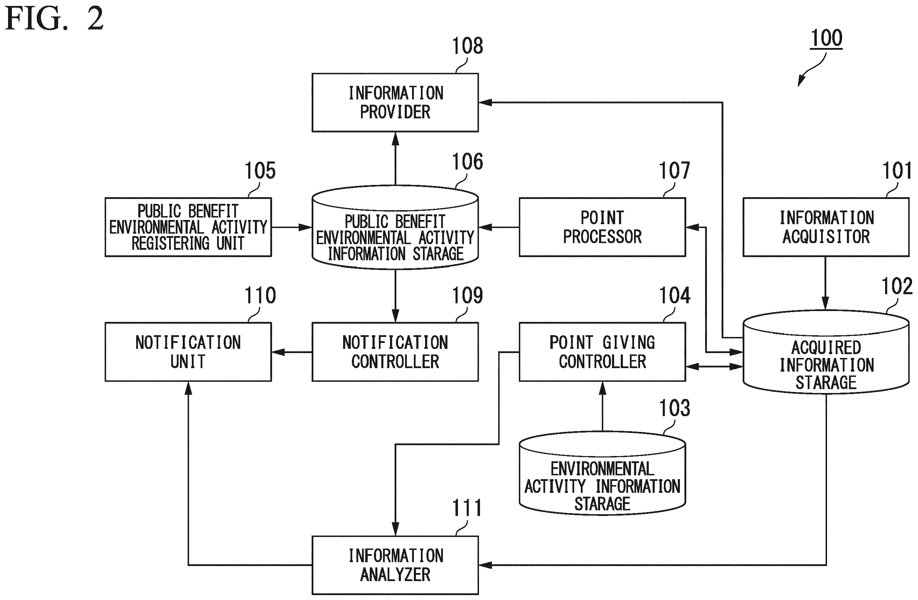

Next, a specific configuration of the environmental activity supporting system 100 will be described. Fig. 2 is a schematic block diagram illustrating the functional configuration of the environmental activity supporting system 100.

The environmental activity supporting system 100 is configured by one or a plurality of information processing devices. For example, when the environmental activity supporting system 100 is configured by one information processing device, the information processing device includes a central processing unit (CPU), a memory, an auxiliary storage device, and the like interconnected through a bus and executes an environmental activity supporting program. By executing the environmental activity supporting program, the information processing device functions as a device including an information acquisitor101, an acquired information storage 102, an environmental activity information storage 103, a point giving controller 104, a public benefit environmental activity registering unit 105, a public benefit environmental activity information storage 106, a point processor 107, an information provider 108, a notification controller 109, a notification unit 110, and an information analyzer 111. Here, all or a part of each function of the environmental activity supporting system 100 may be realized by hardware such as an application specific integrated circuit (ASIC), a programmable logic device (PLD), or a field programmable gate array (FPGA). In addition, the environmental activity supporting system 100 may be realized by dedicated hardware. The environmental activity supporting program may be recorded on a computer-readable recording medium. Here, the computer-readable recording medium, for example, is a portable medium such as a flexible disk, a magneto-optical disc, a ROM, a CD-ROM, or a semiconductor storage device (for example, a solid state drive (SSD)) or a storage device such as a hard disk or a semiconductor storage device built in a computer system. The environmental activity supporting program may be provided through a telecommunication line.

The information acquisitor 101 acquires predetermined determination target information. A more specific example of the information acquisitor 101 will be listed below. The information acquisitor 101 acquires positional information of a user. The information acquisitor 101 acquires acceleration information of a user. The information acquisitor 101 acquires energy use information. The information acquisitor 101 acquires user information. The information acquisitor 101 acquires information of another system by communicating with the other system. Here, the information of the other system represents information relating to the other system. The configuration of the information acquisitor 101 is not limited to the specific examples described above.

The acquired information storage 102 is configured using a storage device such as a magnetic hard disk device or a semiconductor storage device. The acquired information storage 102 stores determination target information acquired by the information acquisitor 101. In addition, the acquired information storage 102 stores acquired determination target information among positional information, acceleration information, and user information and points given by the point giving controller 104 in association with a user ID for each user. The user ID represents identification information used for identifying a user. In addition, the acquired information storage 102 stores positional information and acceleration information in time series for each user. Regarding points, the number of points is updated when the points are given or used.

The environmental activity information storage 103 is configured by using a storage device such as a magnetic hard disk device or a semiconductor storage device. The environmental activity information storage 103 stores an environmental activity table. The environmental activity table is configured of environmental activity records. An environmental activity record is a record representing information relating to a predetermined environmental activity. The environmental activity record includes values of an environmental activity ID, a predetermined environmental activity, a determination condition, and given points. The value of an environmental activity ID represents identification information used for identifying a predetermined environmental activity. The value of a predetermined environmental activity represents a predetermined environmental activity specified by an environmental activity ID of the same environmental activity record. The value of a determination condition represents a condition that is a criterion for determining that a predetermined environmental activity of the same environmental activity record has been performed. In other words, when the determination condition is satisfied, it is determined that a predetermined environmental activity of the same environmental activity record has been performed. The value of given points represents the number of points given when the determination condition of the same environmental activity record is satisfied. In other words, the value of given points represents the number of points given when a predetermined environmental activity of the same environmental activity record is performed.

The point giving controller 104 controls the giving of points to a user based on the determination target information stored in the acquired information storage 102 and the environmental activity table stored in the environmental activity information storage 103. More specifically, first, the point giving controller 104 determines whether or not points are to be given to a user by referring to the determination target information. The determination of whether or not points are to be given to a user is performed based on whether or not a predetermined environmental activity has been performed. Then, when a predetermined environmental activity is determined to have been performed, the point giving controller 104 determines that points are to be given to the user. In such a case, the point giving controller 104 gives points associated with the predetermined environmental activity satisfying the determination condition to a user relating to the determination target information acquired at a time point at which the determination condition is satisfied.

On the other hand, when it is determined that a predetermined environmental activity satisfying the determination condition has not been performed, the point giving controller 104 determines that points are not to be given to the user. In such a case, the point giving controller 104 does not give points. In addition, the point giving controller 104 may control the giving of points at any timing. For example, the point giving controller 104 may control point giving for each user when positional information and acceleration information are newly stored in the acquired information storage 102, may control point giving at a timing at which positional information and acceleration information are newly accumulated a predetermined number of times (for example, 10 times or the like) in the acquired information storage 102, or may analyze information at any other timing.

The public benefit environmental activity registering unit 105 registers a public benefit environmental activity input from the operation provider terminal 200 in the public benefit environmental activity information storage 106.

The public benefit environmental activity information storage 106 is configured by a storage device such as a magnetic hard disk device or a semiconductor storage device. The public benefit environmental activity information storage 106 stores a public benefit environmental activity information table. The public benefit environmental activity information table is configured of public benefit environmental activity records. Each public benefit environmental activity record is a record representing information relating to a public benefit environmental activity.

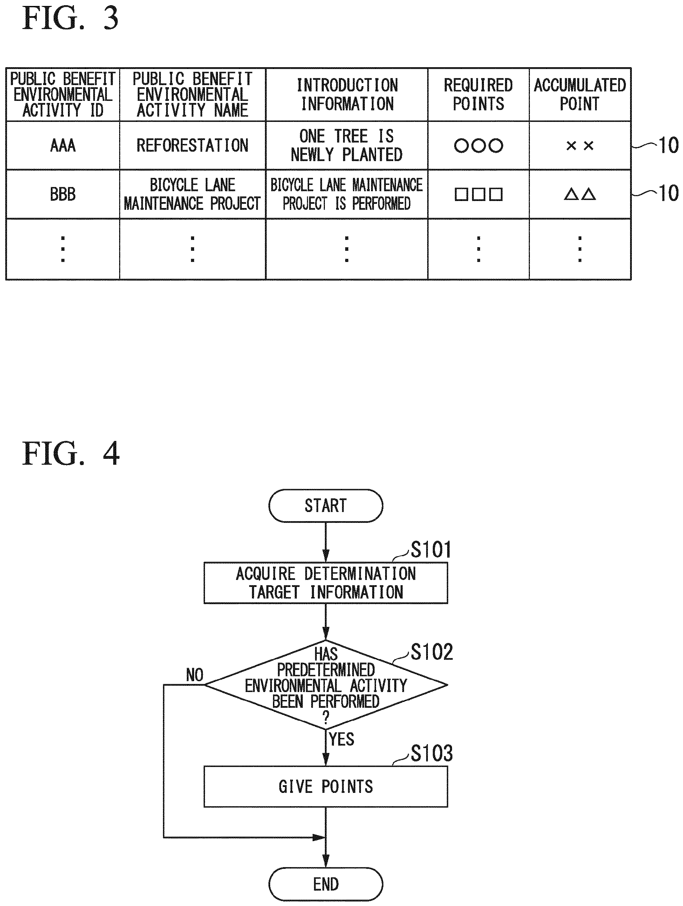

Fig. 3 is a specific example of the public benefit environmental activity information table.

The public benefit environmental activity information table includes a plurality of public benefit environmental activity records 10. Each public benefit environmental activity record 10 includes values of a public benefit environmental activity ID, a public benefit environmental activity name, introduction information, required points, and accumulated points. The value of the public benefit environmental activity ID represents identification information used for identifying a public benefit environmental activity. The value of the public benefit environmental activity name represents the name of the public benefit environmental activity of the same public benefit environmental activity record 10. The value of the introduction information represents an introductory message of the public benefit environmental activity of the same public benefit environmental activity record 10. The value of the required points represents the number of points required for a user to request the performance of the public benefit environmental activity of the same public benefit environmental activity record 10. The value of the accumulated points represents an accumulated value of points assigned to the public benefit environmental activity of the same public benefit environmental activity record 10.

In the example illustrated in Fig. 3, a plurality of public benefit environmental activity IDs are registered in the public benefit environmental activity information table. Such public benefit environmental activity IDs are "AAA" and "BBB." In Fig. 3, in a public benefit environmental activity record 10 registered in an uppermost stage of the public benefit environmental activity information table, the value of the public benefit environmental activity ID is "AAA," the value of the public benefit environmental activity name is "reforestation," the value of the introduction information is "One tree is newly planted.", the value of the required points is "ooo," and the value of the accumulated points is "xx." In other words, it is represented that the name of the public benefit environmental activity specified by the public benefit environmental activity ID "AAA" is "reforestation," and the introductory message of the "reforestation" is "One tree is newly planted," the value of the number of points required for requesting the performance of "reforestation" is "ooo," and the accumulated points assigned to the "reforestation" are "xx."

When a point use notification is received from the user terminal 400, the point processor 107 assigns the number of points to be used by a requesting user among the number of points owned by the requesting user to a public benefit environmental activity desired by the requesting user. Here, the requesting user represents a user requesting the use of points. After the assignment of the points, the point processor 107 subtracts the number of used points from the number of points of the requesting user stored in the acquired information storage 102.

The information provider 108 provides the public benefit environmental activity information registered in the public benefit environmental activity table for the user at a predetermined timing. Here, the predetermined timing, for example, may be a timing at which the providing of the public benefit environmental activity information is requested by the user, a timing at which points are newly given to the user, a timing at which a public benefit environmental activity is newly registered in the public benefit environmental activity information table, or any other timing. When the providing of the public benefit environmental activity information is requested by a user, the information provider 108 transmits the public benefit environmental activity information to the user terminal 400 of the user who is the source of the request. When points are newly given to a user, the information provider 108 transmits the public benefit environmental activity information to the user terminal 400 of the user to which the points have been newly given. When a public benefit environmental activity is newly registered in the public benefit environmental activity information table, the information provider 108 transmits the public benefit environmental activity information to all the user terminals 400.

The notification controller 109 controls the notification made by the notification unit 110. For example, the notification controller 109 causes the notification unit 110 to make a performance request notification.

The notification unit 110 transmits the performance request notification to the operation provider terminal 200 in accordance with the control of the notification controller 109. In addition, the notification unit 110 notifies the operation provider terminal 200 of a result of the analysis acquired by the information analyzer 111.

The information analyzer 111 analyzes information relating to a user based on the information stored in the acquired information storage 102. For example, the information analyzer 111 analyzes a change in each user's activity. Here, the change in the user's activity, for example, represents a long-term change such as the use of a public transport facility (for example, an electric train) by a user, who has used a car as a moving means at a specific time, at the specific time. In addition, for example, the information analyzer 111 analyzes a change in the user's action in accordance with the performance of a public benefit environmental activity. More specifically, the information analyzer 111 analyzes the action of each user after the performance of the public benefit environmental activity.

Fig. 4 is a flowchart illustrating the flow of a point giving process of the environmental activity supporting system 100.

First, the information acquisitor 101 acquires determination target information (Step S101). The information acquisitor 101 stores the acquired determination target information in the acquired information storage 102. Next, the point giving controller 104 determines whether or not a predetermined environmental activity has been performed based on the information stored in the acquired information storage 102 and the environmental activity table (Step S102).

When the predetermined environmental activity is determined to have been performed (Step S102: Yes), the point giving controller 104 gives points to a user relating to the determination target information (Step S103). More specifically, the point giving controller 104 gives points associated with a predetermined environmental activity satisfying a determination condition to a user relating to the determination target information by referring to the environmental activity table. Then, the point giving controller 104 adds the given points to the value of the points owned by the user relating to the determination target information by referring to the acquired information storage 102, thereby updating the points.

On the other hand, when the predetermined environmental activity is determined not to have been performed (Step S102: No), the point giving controller 104 gives no points, and the process ends.

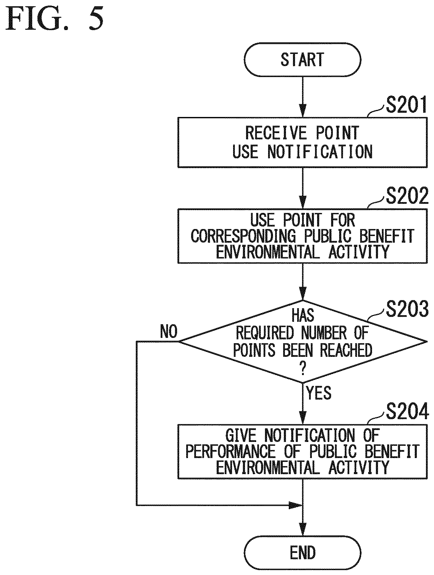

Fig. 5 is a flowchart illustrating the flow of a point assigning process of the environmental activity supporting system 100.

The point processor 107 receives a point use notification transmitted from the user terminal 400 (Step S201). The point processor 107 assigns points corresponding to the number of points included in the point use notification to the public benefit environmental activity desired by the requesting user based on the number of points included in the received point use notification and the information of the public benefit environmental activity (Step S202). More specifically, first, the point processor 107 reads the public benefit environmental activity information table stored in the public benefit environmental activity information storage 106. Next, the point processor 107 selects a public benefit environmental activity record 10 corresponding to the public benefit environmental activity desired by the requesting user among public benefit environmental activity records 10 registered in the read public benefit environmental activity information table. Then, the point processor 107 adds points selected by the requesting user to the value of the accumulated points of the selected public benefit environmental activity record 10. Thereafter, the point processor 107 subtracts used points from the points owned by the requesting user by referring to the acquired information storage 102.

The notification controller 109 determines whether or not the accumulated points corresponding to the public benefit environmental activity to which the points have been added reaches a required number of points (Step S203). When the accumulated points are determined not to have reached the required number of points (Step S203: No), the notification controller 109 ends the process.

On the other hand, when the accumulated points are determined to have reached the required number of points (Step S203: Yes), the notification controller 109 controls the notification made by the notification unit 110. For example, the notification controller 109 generates a performance request notification and notifies the notification unit 110 of the generated performance request notification.

The notification unit 110 notifies the operation provider of the environmental activity supporting system 100 of the performance request notification in accordance with the control of the notification controller 109 (Step S204).

In the environmental activity supporting system 100 configured as described above, it is determined whether or not a predetermined environmental activity has been performed based on the information acquired by the information acquisitor 101, and points are given when the predetermined environmental activity is determined to have been performed. Then, the user assigns the given points to a public benefit environmental activity desired to be newly performed. When the points assigned to the public benefit environmental activity satisfy a set value set in advance, the operation provider terminal 200 is notified of an indication thereof by the environmental activity supporting system 100 and a providing organization is notified thereof by the operation provider operating the operation provider terminal 200. Then, the public benefit environmental activity satisfying the set value is performed by the providing organization. In this way, points are given whenever a user performs a predetermined environmental activity, and the given points are used for performing a public benefit environmental activity. Accordingly, a public benefit environmental activity desired by the user can be realized by a user's action. In other words, a public benefit environmental activity can be promoted by a user's action. For this reason, people's motivation for a public benefit environmental activity is improved, and the public benefit environmental activity can be supported.

In addition, in the environmental activity supporting system 100, a change in the environment is analyzed in accordance with a change in the user's action and the performance of a public benefit environmental activity based on the determination target information acquired by the information acquiring device 300. Then, the operation provider of the environmental activity supporting system 100 is notified of a result of the analysis. The operation provider can perceive the degree of an environmental activity performed by the user by referring to the result of the analysis in the notification. In addition, when a change in the environment according to the performance of the public benefit environmental activity can be perceived, the operation provider can perceive an environmental activity influencing a certain change in the environment. For this reason, the operation provider can use the notification information as an index for a plan of an environmental activity in the future.

In addition, a public benefit environmental activity provided by the providing organization can be freely set according to the situation of the providing organization. For example, the providing organization can provide a public benefit environmental activity in a form designating the use. Accordingly, the providing organization can provide a public benefit environmental activity used with an assumed range. In this way, by providing a public benefit environmental activity according to the situation of a providing organization, the providing organization can highly contribute to a CSR activity. As described above, the environmental activity supporting system 100 according to the embodiment can promote environmental activities on both sides of users for whom the public benefit environmental activities are provided and providing organizations providing the public benefit environmental activities.

An example of the high contribution to a CSR activity described above will be described more specifically.

A providing organization registers a working plan of a public benefit environmental activity of installing LED street lamps on a street in accordance with the number of points as a target for performing a public benefit environmental activity in the environmental activity supporting system 100. By using points for such a public benefit environmental activity, a user can vote therefor or can use points for the installation of LED street lamps at a place desired by the user. The providing organization can perform PR of making a contribution to an environmental activity as a part of the CSR activity and, for example, can make a contribution of brightening the street by installing LED street lamps by making a donation to a public place to improve public security of a commuting route of employees.

The environmental activity supporting system 100 may be configured by any other configuration as long as points can be given based on the determination target information acquired by the information acquisitor 101. For example, the information acquisitor 101 may be a functional unit included in a cloud.

When the information acquiring device 300 is a communication device, the information acquiring device 300 may acquire information of any other device. Here, the other device, for example, is a device of which positional information cannot be acquired and, for example, is a bracelet, a strap, a key holder, or the like that can be worn on the body. In the other device, ID information of the other device is included in advance. The information acquiring device 300 acquires ID information from the other device. Examples of a method of acquiring ID information include code information (for example, a two-dimensional code), Bluetooth (registered trademark), near field communication (NFC), infrared data association (IrDA), and the like. The information acquiring device 300 transmits the acquired ID information, positional information, and time information to the environmental activity supporting system 100.

With this configuration, a user holding a device that is not capable of acquiring positional information can participate in the support system as well. In addition, since communication between a user using the information acquiring device and a user holding a device that is not capable of acquiring positional information can be generated, it is possible to deepen the exchange between users.

Hereinafter, a plurality of specific examples of the environmental activity supporting system 100 according to one embodiment of the present invention will be described in detail.

### (First embodiment)

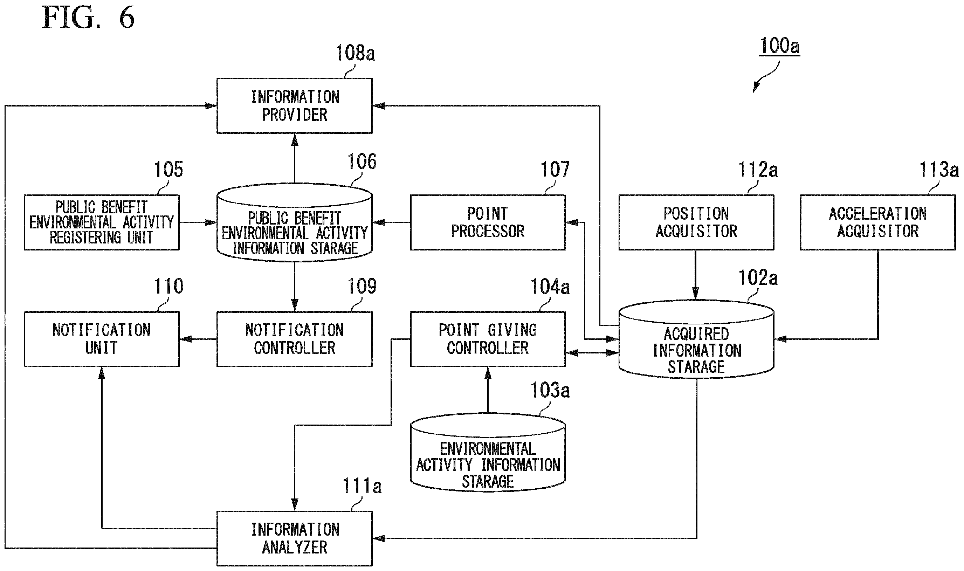

Fig. 6 is a schematic block diagram illustrating the functional configuration of a first embodiment (environmental activity supporting system 100a) of the environmental activity supporting system 100.

The environmental activity supporting system 100a is configured by one or a plurality of information processing devices. For example, when the environmental activity supporting system 100a is configured by one information processing device, the information processing device includes a CPU, a memory, an auxiliary storage device, and the like interconnected through a bus and executes an environmental activity supporting program. According to the execution of the environmental activity supporting program, the information processing device functions as a device including: an acquired information storage 102a; an environmental activity information storage 103a; a point giving controller 104a; a public benefit environmental activity registering unit 105; a public benefit environmental activity information storage 106; a point processor 107; an information provider 108a; a notification controller 109; a notification unit 110; an information analyzer 111a; a position acquisitor 112a; and an acceleration acquisitor 113a. All or a part of each function of the environmental activity supporting system 100a may be realized by hardware such as an ASIC, a PLD, or an FPGA. In addition, the environmental activity supporting system 100a may be realized by dedicated hardware. The environmental activity supporting program may be recorded on a computer-readable recording medium. The environmental activity supporting program may be provided through a telecommunication line. The environmental activity supporting system 100a includes a position acquisitor 112a and an acceleration acquisitor 113a as a specific example of the information acquisitor 101.

Hereinafter, the environmental activity supporting system 100a will be described in detail.

The position acquisitor 112a acquires a user's positional information from the information acquiring device 300. In addition, the position acquisitor 112a may be realized in any form as long as the user's positional information can be acquired.

The acceleration acquisitor 113a acquires the user's acceleration information from the information acquiring device 300. In addition, the acceleration acquisitor 113a may be realized in any form as long as the user's acceleration information can be acquired.

The acquired information storage 102a is configured by a storage device such as a magnetic hard disk device or a semiconductor storage device. The acquired information storage 102a stores positional information, acceleration information, and points given by the point giving controller 104a in association with a user ID for each user. In addition, the acquired information storage 102a stores the positional information and the acceleration information in time series for each user. When the points are given or used, the number of the points is updated.

The environmental activity information storage 103a is configured by using a storage device such as a magnetic hard disk device or a semiconductor storage device. The environmental activity information storage 103a stores an environmental activity table. The environmental activity information storage 103a according to the first embodiment stores a determination condition that is based on the user's positional information and the user's acceleration information as a determination condition of the environmental activity table. Examples of the determination condition include moving on foot, moving using a bicycle, moving on a public transport facility, having an energy use amount and a carbon dioxide discharge amount of a predetermined value or less, and the like.

The point giving controller 104a controls the giving of points to a user based on the positional information and the acceleration information stored in the acquired information storage 102a and the environmental activity table stored in the environmental activity information storage 103a. More specifically, first, the point giving controller 104a estimates a user's moving means from the positional information and the acceleration information. The point giving controller 104a stores information of a vibration waveform for each moving means in advance. The moving means, for example, is walking, a bicycle, a public transport facility (for example, an electric train), or the like. The point giving controller 104a estimates a user's moving means based on a comparison between the vibration waveform of each moving means stored in advance and a vibration waveform on the basis of acceleration of a predetermined period stored in the acquired information storage 102a and a moving path acquired by the positional information of a predetermined period. In addition, the point giving controller 104a estimates an energy consumption amount and a carbon dioxide discharge amount in the moving path according to the estimated moving means.

The point giving controller 104a determines whether or not a predetermined environmental activity satisfying the determination condition has been performed based on the estimated moving means by referring to the environmental activity table. When the predetermined environmental activity satisfying the determination condition is determined to have been performed based on the estimated moving means, the point giving controller 104a determines to give points to the user. In such a case, the point giving controller 104a gives points associated with the predetermined environmental activity satisfying the determination condition to the user. On the other hand, when the predetermined environmental activity satisfying the determination condition is determined not to have been performed based on the estimated moving means, the point giving controller 104a determines not to give points to the user.

A specific example of the process performed by the point giving controller 104a will be described.

When the moving means of the user is estimated to be walking, the point giving controller 104a determines that a predetermined environmental activity satisfying a determination condition has been performed. In such a case, the point giving controller 104a determines to give points to the user. In addition, when the moving means of the user is a public transport facility, and estimated values of the energy use amount and the carbon dioxide discharge amount according to the public transport facility are predetermined values or less, the point giving controller 104a determines that a predetermined environmental activity satisfying a determination condition has been performed. In such a case, the point giving controller 104a determines to give points to the user. In addition, the point giving controller 104a notifies the information analyzer 111a of a result of the estimation of the moving means.

The information analyzer 111a analyzes information based on the positional information and the acceleration information stored in the acquired information storage 102a and the result of the estimation. For example, the information analyzer 111a analyzes a change in the activity of each user. In addition, for example, the information analyzer 111a analyzes a change in the user's action according to the performance of a public benefit environmental activity. In addition, the information analyzer 111a performs an analysis of a route and an analysis of a substitute moving means based on the result of the estimation of the moving means of which the point giving controller 104a has notified. More specifically, the information analyzer 111a searches for a moving means having an energy use amount and a carbon dioxide discharge amount less than those of the moving means that is currently used by the user. In addition, when the user inputs a destination in advance, the information analyzer 111a searches for a moving means and a moving path having an energy use amount and a carbon dioxide discharge amount less than those of the moving means that is currently used by the user as a substitute moving means and having a moving time within a predetermined time.

The information provider 108a provides public benefit environmental activity information registered in the public benefit environmental activity table for the user at predetermined timing. In addition, the information provider 108a provides a result of the analysis performed by the information analyzer 111a for the target user.

In the environmental activity supporting system 100a configured in this way, the moving means of the user is estimated based on the positional information and the acceleration information. Then, it is determined whether or not a predetermined environmental activity has been performed by the estimated moving means, and points are given when the predetermined activity is determined to have been performed. Then, the user assigns the given points to a public benefit environmental activity desired to be newly performed. When the points assigned to the public benefit environmental activity satisfy a set value set in advance, the operation provider terminal 200 is notified of an indication thereof by the environmental activity supporting system 100a and a providing organization is notified thereof by the operation provider operating the operation provider terminal 200. Then, the public benefit environmental activity satisfying the set value is performed by the providing organization. In this way, points are given when a user performs a predetermined environmental activity, and the given points are used for performing a public benefit environmental activity. Accordingly, the public benefit environmental activity can be promoted by the user's action. For this reason, the person's motivation for public benefit environmental activities is improved, and the public benefit environmental activity can be supported.

Hereinafter, a modification of the environmental activity supporting system 100a will be described.

Some of the functional units of the environmental activity supporting system 100a may be functional units that are included in a cloud. For example, the position acquisitor 112a and the acceleration acquisitor 113a may be functional units included in a cloud.

When it is determined that a plurality of users have used the same moving path or the same moving path up to a predetermined distance based on the positional information, the point giving controller 104a may give points to the plurality of users who have used the same moving path or the same moving path up to the predetermined distance in accordance with the supply of the moving means.

When users participating in an event are predicted to aggregate or return home in the same direction, the environmental activity supporting system 100a may be configured to transmit a guide for proceeding to riding together to the user terminals 400 of the target users. For example, it is assumed that one person participates in an event by using his own car, and two other people participate in the event by way of public transport facilities. In such a case, if users moving in the same direction ride together instead of respectively using independent public transport facilities, the users can contribute to an environmental activity. Thus, the information analyzer 111a recognizes users participating in an event based on information (for example, the positional information) stored in the acquired information storage 102. Then, the information analyzer 111a specifies a plurality of users moving in the same direction as a result of the recognition. The information analyzer 111a gives a notification of information for proceeding to riding together to the information provider 108 based on information of moving paths of a plurality of specified users. The information provider 108 provides the information for proceeding to riding together for the user terminals 400 of the plurality of the users moving in the same direction in accordance with the control of the information analyzer 111a.

### (Second embodiment)

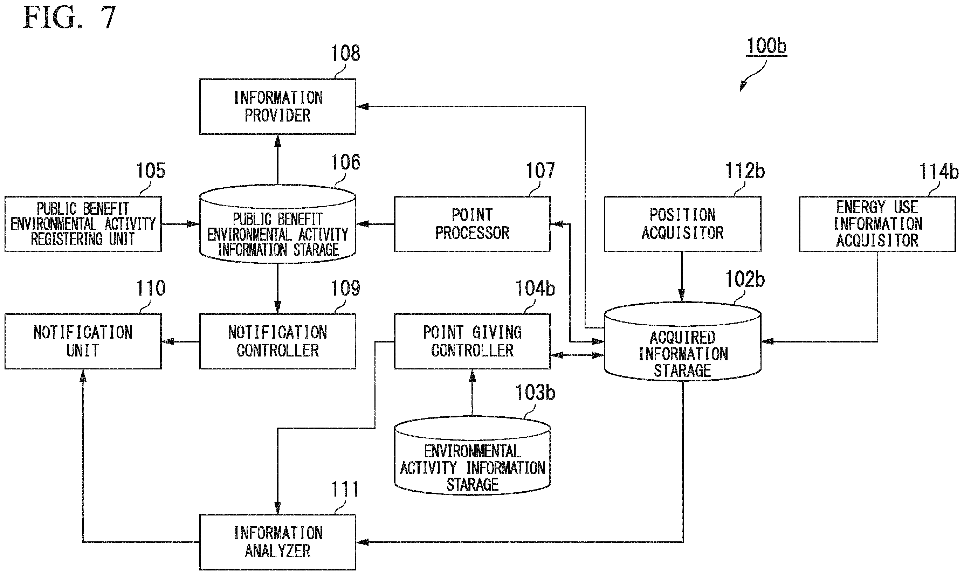

Fig. 7 is a schematic block diagram illustrating the functional configuration of a second embodiment (environmental activity supporting system 100b) of the environmental activity supporting system 100.

The environmental activity supporting system 100b is configured by one or a plurality of information processing devices. For example, when the environmental activity supporting system 100b is configured by one information processing device, the information processing device includes a CPU, a memory, an auxiliary storage device, and the like interconnected through a bus and executes an environmental activity supporting program. By executing the environmental activity supporting program, the information processing device functions as a device including an acquired information storage 102b, an environmental activity information storage 103b, a point giving controller 104b, a public benefit environmental activity registering unit 105, a public benefit environmental activity information storage 106, a point processor 107, an information provider 108, a notification controller 109, a notification unit 110, an information analyzer 111, a position acquisitor 112b, and an energy use information acquisitor 114b. Here, all or a part of each function of the environmental activity supporting system 100b may be realized by hardware such as an ASIC, a PLD or an FPGA. In addition, the environmental activity supporting system 100b may be realized by dedicated hardware. The environmental activity supporting program may be recorded on a computer-readable recording medium. The environmental activity supporting program may be provided through a telecommunication line. The environmental activity supporting system 100b includes the position acquisitor 112b and the energy use information acquisitor 114b as a specific example of the information acquisitor 101.

Hereinafter, the environmental activity supporting system 100b will be described in detail.

The position acquisitor 112b acquires positional information of a user from the information acquiring device 300. Here, the position acquisitor 112b may be realized in any form as long as the positional information of a user can be acquired.

The energy use information acquisitor 114b acquires energy use information of the inside of a building from the information acquiring device 300. In addition, the energy use information acquisitor 114b acquires energy use information of the whole region from a power company or the like.

The acquired information storage 102b is configured using a storage device such as a magnetic hard disk device or a semiconductor storage device. The acquired information storage 102b stores energy use information. In addition, the acquired information storage 102b stores positional information and points given by the point giving controller 104b in association with a user ID for each user. In addition, the acquired information storage 102b stores positional information in a time series for each user. Regarding points, the number of points is updated when the points are given or used.

The environmental activity information storage 103b is configured by using a storage device such as a magnetic hard disk device or a semiconductor storage device. The environmental activity information storage 103b stores an environmental activity table. In the second embodiment, the environmental activity information storage 103b stores a determination condition on the basis of the positional information of the user and the energy use information as a determination condition of the environmental activity table. An example of the determination condition includes a condition that an energy use amount of the inside of a building or the whole region be a predetermined value or less or the like.

The point giving controller 104b controls the giving of points to a user based on the positional information and the energy use information stored in the acquired information storage 102b and the environmental activity table stored in the environmental activity information storage 103b. More specifically, first, the point giving controller 104b estimates an energy use amount of the inside of a building in which the user is located or the whole region based on the positional information and the energy use information. In addition, when a plurality of users are located inside the same building or in the whole region, the point giving controller 104b estimates an energy use amount per user by proportionally dividing the energy use amount.

The point giving controller 104b determines whether or not a predetermined environmental activity satisfying a determination condition has been performed based on the estimated energy use amount by referring to the environmental activity table. When the predetermined environmental activity satisfying the determination condition is determined to have been performed based on the estimated energy use amount, the point giving controller 104b determines to give points to the user. In this case, the point giving controller 104b gives points associated with the predetermined environmental activity satisfying the determination condition to the user. On the other hand, when the predetermined environmental activity satisfying the determination condition is determined not to have been performed based on the estimated energy use amount, the point giving controller 104b determines not to give points to the user.

A specific example of the process performed by the point giving controller 104b will be described.

When the estimated energy use amount is a predetermined value or less, the point giving controller 104b determines that a predetermined environmental activity satisfying the determination condition has been performed. In this case, the point giving controller 104b determines to give points to the user.

In the environmental activity supporting system 100b, the user's energy use amount of the inside of a building or a region in which the user is located is estimated based on the positional information and the energy use information. Then, it is determined whether or not a predetermined environmental activity has been performed by using the estimated energy use amount, and points are given when the predetermined activity is determined to have been performed. Then, the user assigns the given points to a public benefit environmental activity desired to be newly performed. When points assigned to the public benefit environmental activity satisfy a set value set in advance, the operation provider terminal 200 is notified of an indication thereof by the environmental activity supporting system 100b and a providing organization is notified thereof by the operation provider operating the operation provider terminal 200. Then, the public benefit environmental activity satisfying the set value is performed by the providing organization. In this way, points are given when a user performs a predetermined environmental activity, and the given points are used for performing a public benefit environmental activity. Accordingly, a public benefit environmental activity can be promoted by a user's action. For this reason, the motivation of individual people for public benefit environmental activities is improved, and the activation of public benefit environmental activities can be supported.

Hereinafter, a modification of the environmental activity supporting system 100b will be described.

Some of the functional units of the environmental activity supporting system 100b may be functional units that are included in a cloud. For example, the position acquisitor 112b and the energy use information acquisitor 114b may be functional units included in a cloud.

### (Third Embodiment)

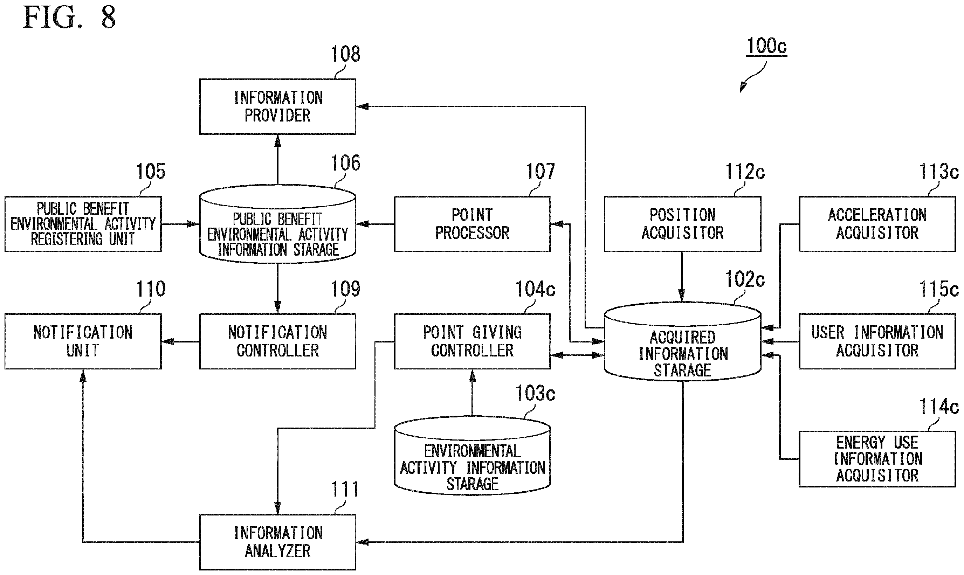

Fig. 8 is a schematic block diagram illustrating the functional configuration of a third embodiment (environmental activity supporting system 100c) of the environmental activity supporting system 100.

The environmental activity supporting system 100c is configured by one or a plurality of information processing devices. For example, when the environmental activity supporting system 100c is configured by one information processing device, the information processing device includes a CPU, a memory, an auxiliary storage device, and the like interconnected through a bus and executes an environmental activity supporting program. By executing the environmental activity supporting program, the information processing device functions as a device including an acquired information storage 102c, an environmental activity information storage 103c, a point giving controller 104c, a public benefit environmental activity registering unit 105, a public benefit environmental activity information storage 106, a point processor 107, an information provider 108, a notification controller 109, a notification unit 110, an information analyzer 111, a position acquisitor 112c, an acceleration acquisitor 113c, an energy use information acquisitor 114c, and a user information acquisitor 115c. Here, the whole or a part of each function of the environmental activity supporting system 100c may be realized by hardware such as an ASIC, a PLD or a FPGA. In addition, the environmental activity supporting system 100c may be realized by dedicated hardware. The environmental activity supporting program may be recorded on a computer-readable recording medium. The environmental activity supporting program may be provided through a telecommunication line. The environmental activity supporting system 100c includes the position acquisitor 112c, the acceleration acquisitor 113c, the energy use information acquisitor 114c, and the user information acquisitor 115c as a specific example of the information acquisitor 101.

Hereinafter, the environmental activity supporting system 100c will be described in detail.

The position acquisitor 112c acquires positional information of a user from an information acquiring device 300. Here, the position acquisitor 112c may be realized in any form as long as the positional information of a user can be acquired.

The acceleration acquisitor 113c acquires acceleration information of a user from the information acquiring device 300. Here, the acceleration acquisitor 113c may be realized in any form as long as the acceleration information of a user can be acquired.

The energy use information acquisitor 114c acquires energy use information of the inside of a building from the information acquiring device 300. In addition, the energy use information acquisitor 114c acquires information of an energy use amount of the whole region from a power company or the like.

The user information acquisitor 115c acquires user information from the information acquiring device 300. The user information, for example, is information of age, sex, a place of birth, and the like of a user. However, the user information is not limited thereto but may be any kind of information that can be provided by a user operating the user terminal 400.

The acquired information storage 102c is configured using a storage device such as a magnetic hard disk device or a semiconductor storage device. The acquired information storage 102c stores energy use information. In addition, the acquired information storage 102c stores positional information, acceleration information, user information, and points given by the point giving controller 104c in association with a user ID for each user. In addition, the acquired information storage 102c stores positional information, acceleration information, and user information in time series for each user. Regarding points, the number of points is updated when the points are given or used.

The environmental activity information storage 103c is configured by using a storage device such as a magnetic hard disk device or a semiconductor storage device. The environmental activity information storage 103c stores an environmental activity table. In the third embodiment, the environmental activity information storage 103c stores a determination condition that is based on an environmental activity in a broad sense representing contribution to the improvement of people's living or the development of a city as a determination condition of the environmental activity table. Examples of the environmental activity in a broad sense include the degree of ecology, the degree of health, the degree of activity, the degree of cooperation for the measurement of data, the degree of community, the degree of local-area person, and the like. However, environmental activities in a broad sense are not limited to the activities described above.

The degree of ecology represents activities contributing to ecology such as energy saving or a reduction in carbon dioxide.

The degree of health represents activities for means (for example, selection of on-foot as a moving means or the like) for promoting the health of people.

The degree of activity represents contributory activities relating to the activation of a street. Examples of contributory activities relating to the activation of a street include participation to an event held in a local area, purchase of a special product of a local area, and the like.

The degree of cooperation for the measurement of data represents contributory activities for an analysis of data such as provision of the positional information, the acceleration information, and the user information.

The degree of community represents contributory activities for the activation of communication among people. An example of a contributory activity in the degree of community includes performing many actions together with other people.

The degree of local-area person represents contributory activities for a specific place such as introducing of a local area to people or inquiring of the place in a tour.

Hereinafter, a determination condition of a case where an environmental activity in a broad sense is each of the contributory activities described above.

A determination condition of a case where the environmental activity in a broad sense is the degree of ecology is a condition that an energy use amount or a carbon dioxide discharge amount is a predetermined value of less owing to moving on foot, moving by bicycle, or moving on a public transport facility.

A determination condition of a case where an environmental activity in a broad sense is the degree of health is moving on foot or the like.

A determination condition of a case where an environmental activity in a broad sense is the degree of activities is a condition of participating to an event, a condition of purchasing a special product of the land, or the like. The participating to an event is determined based on the positional information of a user and the positional information of the event. The purchasing of a special product of the land is determined according to whether or not a user located at a store selling a special product based on the positional information of the user.

A determination condition of a case where an environmental activity in a broad sense is the degree of cooperation for the measurement of data is the acquisition of positional information, the acquisition of acceleration information, the acquisition of user information, or the like.

A determination condition of a case where an environmental activity in a broad sense is the degree of community is a plurality of users being located at a same place or the like.

A determination condition of a case where an environmental activity in a broad sense is the degree of local-area person is as follows. For example, the coincidence of a place represented by the positional information of a user and the place of birth recorded in the user information on the basis of the user information stored in the acquired information storage 102 or the like.

The point giving controller 104c controls the giving of points to a user based on one of the positional information, the acceleration information, the energy use information, and the user information stored in the acquired information storage 102c and the environmental activity table stored in the environmental activity information storage 103c. More specifically, the point giving controller 104c determines whether or not a predetermined environmental activity satisfying a determination condition has been performed based on one of the positional information, the acceleration information, the energy use information, and the user information stored in the acquired information storage 102c by referring to the environmental activity table. When the predetermined environmental activity satisfying the determination condition is determined to have been performed, the point giving controller 104c determines that points are to be given to the user. In this case, the point giving controller 104c gives points associated with the predetermined environmental activity satisfying the determination condition to the user. On the other hand, when the predetermined environmental activity satisfying the determination condition is determined not to have been performed based on the estimated moving means, the point giving controller 104c determines not to give points to the user.

A specific example of the process performed by the point giving controller 104c will be described.

When the estimated moving means of the user is estimated to be on foot, the point giving controller 104c determines that a predetermined environmental activity satisfying the determination condition has been performed. In this case, the point giving controller 104c determines to give points to the user.

In addition, when the user participates in an event, the point giving controller 104c determines that a predetermined environmental activity satisfying the determination condition has been performed. In this case, the point giving controller 104c determines to give points to the user participating in the event.

Furthermore, when one of the positional information, the acceleration information and the user information is acquired from the user, the point giving controller 104c determines that a predetermined environmental activity satisfying the determination condition has been performed. In this case, the point giving controller 104c determines to give points to the user who has provided one of the positional information, the acceleration information, and the user information.

In addition, when a plurality of users are located at a same place, the point giving controller 104c determines that a predetermined environmental activity satisfying the determination condition has been performed. In this case, the point giving controller 104c determines to give points to the users located at the same place.

Furthermore, when a place represented in the positional information of the user and the place of birth recorded in the user information coincide with each other, the point giving controller 104c determines that a predetermined environmental activity satisfying the determination condition has been performed. In this case, the point giving controller 104c determines to give points to the user for which the place represented in the positional information of the user and the place of birth recorded in the user information coincide with each other.

In the environmental activity supporting system 100c configured as described above, it is determined whether or not a predetermined environmental activity has been performed based on a plurality of pieces of information such as the positional information, the acceleration information, the energy use information, and the user information, and points are given when the predetermined environmental activity is determined to have been performed. Then, the user assigns the given points to a public benefit environmental activity desired to be newly performed. When the points assigned to the public benefit environmental activity satisfy a set value set in advance, an indication thereof is notified from the environmental activity supporting system 100c to the operation provider terminal 200 and is notified from the operation provider operating the operation provider terminal 200 to a providing organization. Then, the public benefit environmental activity satisfying the set value is performed by the providing organization. In this way, points are given when a user performs a predetermined environmental activity, and the given points are used for performing a public benefit environmental activity. Accordingly, a public benefit environmental activity can be promoted by a user's action. For this reason, person's motivation for a public benefit environmental activity is improved, and the public benefit environmental activity can be supported.

Hereinafter, a modification of the environmental activity supporting system 100c will be described.

Some of the functional units of the environmental activity supporting system 100c may be functional units that are included in a cloud. For example, any one of the position acquisitor 112c, the acceleration acquisitor 113, the energy use information acquisitor 114b, and the user information acquisitor 115c may be a functional unit included in a cloud.

### (Fourth Embodiment)

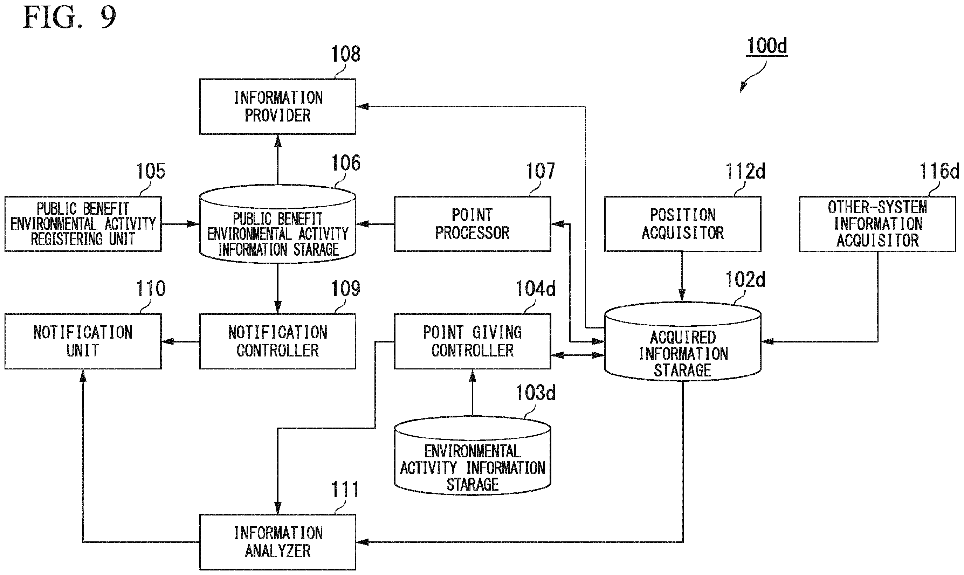

Fig. 9 is a schematic block diagram illustrating the functional configuration of a fourth embodiment (environmental activity supporting system 100d) of the environmental activity supporting system 100.

The environmental activity supporting system 100d is configured by one or a plurality of information processing devices. For example, when the environmental activity supporting system 100d is configured by one information processing device, the information processing device includes a CPU, a memory, an auxiliary storage device, and the like interconnected through a bus and executes an environmental activity supporting program. By executing the environmental activity supporting program, the information processing device functions as a device including an acquired information storage 102d, an environmental activity information storage 103d, a point giving controller 104d, a public benefit environmental activity registering unit 105, a public benefit environmental activity information storage 106, a point processor 107, an information provider 108, a notification controller 109, a notification unit 110, an information analyzer 111, a position acquisitor 112d, and an other-system information acquisitor 116d. Here, the whole or a part of each function of the environmental activity supporting system 100d may be realized by hardware such as an ASIC, a PLD or a FPGA. In addition, the environmental activity supporting system 100d may be realized by dedicated hardware. The environmental activity supporting program may be recorded on a computer-readable recording medium. The environmental activity supporting program may be provided through a telecommunication line. The environmental activity supporting system 100d includes the position acquisitor 112d and the other-system information acquisitor 116d as a specific example of the information acquisitor 101.

Hereinafter, the environmental activity supporting system 100d will be described in detail.

The position acquisitor 112d acquires positional information of a user from an information acquiring device 300. Here, the position acquisitor 112d may be realized in any form as long as the positional information of a user can be acquired.

The other-system information acquisitor 116d acquires other system information by communicating with any other system. Specific examples of the other system include a watching system, a rent-a-car managing system, a car sharing system, a navigation system, a bicycle touring log system, an intelligent transport system, a station service equipment system, and the like. In addition, the other system does not need to be limited to the system described above.

The acquired information storage 102d is configured using a storage device such as a magnetic hard disk device or a semiconductor storage device. The acquired information storage 102d stores the other-system information. In addition, the acquired information storage 102d stores positional information and points given by the point giving controller 104d in association with a user ID for each user. In addition, the acquired information storage 102d stores positional information in a time series for each user. Regarding points, the number of points is updated when the points are given or used.

The environmental activity information storage 103d is configured by using a storage device such as a magnetic hard disk device or a semiconductor storage device. The environmental activity information storage 103d stores an environmental activity table. In the fourth embodiment, the environmental activity information storage 103d stores a determination condition that is based on whether or not a user uses any other system as a determination condition of the environmental activity table. Examples of the determination condition include a condition that the user has used the watching system, a condition that the user has used the station service equipment system, a condition that the user has used the navigation system, and the like.

The point giving controller 104d controls the giving of points to a user based on the positional information and the other-system information stored in the acquired information storage 102d and the environmental activity table stored in the environmental activity information storage 103d. More specifically, first, the point giving controller 104d determines whether or not the user has used any other system based on the positional information and the other-system information. The point giving controller 104d determines whether or not a predetermined environmental activity satisfying the determination condition has been performed based on whether the user has used any other system by referring to the environmental activity table. When a predetermined environmental activity satisfying the determination condition is determined to have been performed based on the positional information and the other-system information, the point giving controller 104d determines that points are to be given to the user. In such a case, the point giving controller 104d gives points associated with the predetermined environmental activity satisfying the determination condition to the user. On the other hand, when a predetermined environmental activity satisfying the determination condition is determined not to have been performed based on the positional information and the other-system information, the point giving controller 104d determines that points are not to be given to the user.

A specific example of the process performed by the point giving controller 104d will be described.

When the positional information of the user and a position represented by the navigation system approximately coincide with each other, the point giving controller 104d determines that the user has used the navigation system and determines that a predetermined environmental activity satisfying the determination condition has been performed. In this case, the point giving controller 104d determines that points are to be given to the user located at a position approximately coinciding with the position represented by the navigation system.

In addition, the point giving controller 104d determines that a user has used a public transport facility based on the positional information of the user and the use information of a payment system of a transportation IC card (for example, Suica (registered trademark)) of the station service equipment system and determines that a predetermined environmental activity satisfying the determination condition has been performed. In this case, the point giving controller 104d determines that points are to be given to the user who has used the public transport facility. However, in order to use the use information of the payment system of the transportation IC card, it is necessary to receive personal information from the user. For example, personal information registered in the transportation IC card from the user needs to be registered in the environmental activity supporting system 100d. For this reason, the point giving controller 104d may raise a giving ratio of points for such a user in accordance with the contribution of the information provision.

By configuring as such, measurement that is more reliable than that of a case where only the positional information of the user is used can be performed, and the analysis accuracy can be improved. In addition, such information can be also used for the improvement of the estimation accuracy of the position of a user not providing personal information.

In the environmental activity supporting system 100d configured as described above, it is determined whether or not a predetermined environmental activity has been performed based on the positional information and the other-system information, and points are given when the environmental activity is determined to have been performed. Then, the user assigns the given points to a public benefit environmental activity desired to be newly performed. When the points assigned to the public benefit environmental activity satisfy a set value set in advance, an indication thereof is notified from the environmental activity supporting system 100d to the operation provider terminal 200 and is notified from the operation provider operating the operation provider terminal 200 to a providing organization. Then, the public benefit environmental activity satisfying the set value is performed by the providing organization. In this way, points are given when a user performs a predetermined environmental activity, and the given points are used for performing a public benefit environmental activity. Accordingly, a public benefit environmental activity can be promoted by a user's action. For this reason, person's motivation for a public benefit environmental activity is improved, and the public benefit environmental activity can be supported.

Hereinafter, a modification of the environmental activity supporting system 100d will be described.

Some of the functional units of the environmental activity supporting system 100d may be functional units that are included in a cloud. For example, the position acquisitor 112d and the other-system information acquisitor 116d may be functional units included in a cloud.

Hereinafter, modifications common to the first embodiment to the fourth embodiment will be described.

The environmental activity supporting systems 100a to 100d according to the embodiments may be configured to give points only for a predetermined environmental activity performed within a predetermined region. When such a configuration is employed, when a predetermined environmental activity is performed outside the predetermined region, the environmental activity supporting systems 100a to 100d do not give points for the predetermined environmental activity performed outside the predetermined region as a non-target for point giving.

When a user located at a place, which is set in advance, at date and time set in advance is determined to be present based on the positional information, the point giving controllers 104a to 104d according to the embodiments may give points to the user located at the place at the date and time set in advance.

According to at least one embodiment described above, a point giving controller configured to determine whether or not a predetermined environmental activity satisfying a condition registered in advance is performed based on determination target information and give points used for employing new performance of a public benefit environmental activity to a user relating to the determination target information when the predetermined environmental activity is determined to be performed, a point processor configured to assign points of the user to the public benefit environmental activity desired by the user when a request indicating use of the points is made from the user, and a notification unit configured to give a notification of information of the public benefit environmental activity satisfying a set value set in advance in accordance with points assigned to the public benefit environmental activity are included, whereby people's motivation for public benefit environmental activities is improved, and public benefit environmental activities can be supported.

While several embodiments of the present invention have been described, such embodiments are presented as examples but are not intended to limit the scope of the present invention. These embodiments may be performed in other various forms, and various omissions, substitutions, and changes may be performed in a range not departing from the concept of the present invention therein. These embodiments and the modifications thereof, similar to a case where these are included in the scope or the concept of the invention, are included in inventions described in the claims and equivalent ranges thereof.

### [Reference Signs List]

100 Environmental activity supporting system
200 Operation provider terminal
300 Information acquiring device
400 User terminal
101 Information acquisitor
102, 102a, 102b, 102c, 102d Acquired information storage
103, 103a, 103b, 103c, 103d Environmental activity information storage
104, 104a, 104b, 104c, 104d Point giving controller
105 Public benefit environmental activity registering unit
106 Public benefit environmental activity information storage
107 Point processor
108, 108a Information provider
109 Notification controller
110 Notification unit
111 Information analyzer
112a, 112b, 112c, 112d Position acquisitor
113a, 113c Acceleration acquisitor
114b, 114c Energy use information acquisitor
115c User information acquisitor
116d Other-system information acquisitor

## Claims

1. An environmental activity supporting system comprising:
a point giving controller configured to determine whether or not a predetermined environmental activity satisfying a condition registered in advance is performed based on determination target information used for determining whether or not the predetermined environmental activity is performed and give points used for employing new performance of a public benefit environmental activity to a user relating to the determination target information when the predetermined environmental activity is determined to be performed;
a point processor configured to assign points of the user to the public benefit environmental activity desired by the user when a request indicating use of the points is made by the user; and
a notification unit configured to notify of information of the public benefit environmental activity satisfying a set value set in advance in accordance with points assigned to the public benefit environmental activity.

2. The environmental activity supporting system according to claim 1,
wherein the determination target information is information relating to positional information of the user or moving of the user, and
wherein the point giving controller is configured to estimate a moving means used by the user based on the acquired determination target information, determine whether or not a predetermined environmental activity satisfying the condition is performed based on the moving means, and give the points to the user when the predetermined environmental activity is performed.

3. The environmental activity supporting system according to claim 1,
wherein the determination target information is information relating to a position of the user or information relating to an energy use amount of the inside of a building, and
wherein the point giving controller is configured to estimate the energy use amount of the inside of the building in which the user is located based on the acquired determination target information, determine whether or not a predetermined environmental activity satisfying the condition is performed based on the energy use amount, and give the points to the user when the predetermined environmental activity is performed.

4. The environmental activity supporting system according to claim 1,
wherein the determination target information is information relating to a position of the user, information relating to moving of the user, information relating to an energy use amount of the inside of a building, or information relating to the user, and
wherein the point giving controller is configured to determine whether or not a predetermined environmental activity satisfying the condition representing that the user contributes to improvement of people's lives or development of a city is performed based on the acquired determination target information and give the points to the user when the predetermined environmental activity is performed.

5. The environmental activity supporting system according to claim 1,
wherein the determination target information is information relating to a position of the user or information relating to another system, and
wherein the point giving controller is configured to determine whether or not a predetermined environmental activity satisfying the condition is performed according to whether the user uses the other system based on the acquired determination target information and give points to the user when the predetermined environmental activity is performed.

6. The environmental activity supporting system according to any one of claims 1 to 5, further comprising:
a storage configured to store the determination target information; and
an information analyzer configured to analyze a change in an activity or a change in an action of a user relating to the determination target information based on the stored determination target information.

7. The environmental activity supporting system according to any one of claims 1 to 6,
wherein the public benefit environmental activity is an activity registered as a providing organization makes a donation for the public in accordance with the number of the points as an activity contributing to a society and an environment, and
wherein the notification unit is configured to notify an operation provider of information of the public benefit environmental activity satisfying the number of points when an accumulated value of points assigned to the public benefit environmental activity satisfies the number of the points set in advance.

8. An environmental activity supporting method comprising:
determining whether or not a predetermined environmental activity satisfying a condition registered in advance is performed based on determination target information used for determining whether or not the predetermined environmental activity is performed and giving points used for employing new performance of a public benefit environmental activity to a user relating to the determination target information when the predetermined environmental activity is determined to be performed;
assigning points of the user to the public benefit environmental activity desired by the user when a request indicating use of the points is made by the user; and
notifying of information of the public benefit environmental activity satisfying a set value set in advance in accordance with points assigned to the public benefit environmental activity.

9. A computer program for causing a computer to perform:
determining whether or not a predetermined environmental activity satisfying a condition registered in advance is performed based on determination target information used for determining whether or not the predetermined environmental activity is performed and giving points used for employing new performance of a public benefit environmental activity to a user relating to the determination target information when the predetermined environmental activity is determined to be performed;
assigning points of the user to the public benefit environmental activity desired by the user when a request indicating use of the points is made by the user; and
notifying of information of the public benefit environmental activity satisfying a set value set in advance in accordance with points assigned to the public benefit environmental activity.
